# EUROPEAN PATENT SPECIFICATION

(11) **EP 0 517 419 B1**
(45) Date of publication and mention of the grant of the patent: **13.09.1995**
(21) Application number: 92304811.0
(22) Date of filing: 28.05.1992
(51) Int. Cl.: B60D 1/42, A01B 63/114, E02F 9/20

(54) **Draft control system with safety disconnect**
Regelsystem für Anhängerkupplung mit Entkupplungssicherheitsvorrichtung
Système de réglage avec décrochage de sécurité pour un attelage

(30) Priority: 03.06.1991 US 709236; 03.06.1991 US 709237; 03.06.1991 US 709184; 03.06.1991 US 709185; 10.09.1991 US 757173
(43) Date of publication of application: 09.12.1992
(73) Proprietor: NEW HOLLAND U.K. LIMITED, Basildon, Essex SS14 3AD (GB)
(72) Inventor: Cornell, Charles R., Naperville, Illinois 60565 (US); Strosser, Richard P., Akron, Pennsylvania 17540 (US); Macqueene, James William, Willowbrook, Illinois 60514 (US); Young, Steven C., Lancaster, Pennsylvania 17601 (US); Swierenga, Garrett E., Westmont, Illinois 60559 (US); Nielsen, Bradley A., New Holland, Pennsylvania 17557 (US); Sokol, David G., New Holland, Pennsylvania 17557 (US); Miller, Matthew T., Waterloo, Iowa 50702 (US)
(74) Representative: Singleton, Jeffrey

(56) References cited:
- DE-A- 3 838 496
- US-A- 4 132 273
- US-A- 4 796 712
- SAE technical paper no 901561 "development of the Electronic Draft Control System for the Ford New Holland 8210 Tractor

## Description

The present invention relates to an automatic draft control system for controlling the positioning of a hitch to which an implement, such as a plow, is attached. More particularly, this invention relates to improvements in electronic draft control systems of the type disclosed by Macqueene et al. in SAE Technical Paper No. 901561 entitled Development of the Electronic Draft Control System for the Ford New Holland 8210 Tractor.

The aforementioned technical paper describes a microprocessor-based automatic draft control system for a three-point hitch. A tillage implement is attached to the hitch and the hitch is mounted at the rear of a tractor having pneumatic tires. A single quadrant lever, located in the tractor cab, is manually moved by the operator to generate position/draft commands which cause raising or lowering of the hitch. Draft sensors sense the draft on the hitch and a position sensor senses the position of the hitch, the sensors producing feedback signals to the microprocessor. The microprocessor responds to the position/draft commands and the feedback signals from the sensors by generating output signals for adjusting the hitch to the position commanded by the quadrant lever. The microprocessor output signals are applied to a solenoid of a closed-center valve, the valve in turn controlling hydraulic flow applied to a lift-cylinder which raises the hitch.

While systems of the type described by Macqueene et al. work quite well, uncommanded movement of the hitch may occur if a valve solenoid is energized through use of a low side driver. That is, if one end of the solenoid is connected to a positive voltage and the solenoid is energized by selectively connecting the other end of the solenoid to ground through a switch (driver) any inadvertent grounding of the wire lead connecting the switch to the solenoid or driver failure in an "on" state causes the solenoid to be energized. This, in turn, causes uncommanded movement of the hitch.

If the system is operating in a closed-loop mode, the feedback signals resulting from the uncommanded movement act through the feedback loop so that the hitch position commanded by the quadrant lever is maintained. However, the closed-loop mode may be aborted so that the operator may use fender mounted switches to control raising or lowering the hitch in an open-loop mode thereby facilitating attachment or removal of an implement from the hitch. Also, at start-up the hitch may not be under closed-loop control because the hitch is not "captured", i.e. at the position commanded by the quadrant lever. If the lead between the valve solenoid and its driver switch should be shorted to ground while the system is in an open-loop mode, uncommanded movement of the hitch will take place. Such movement, of course, could be dangerous.

While the system described above works quite well, it has an undesirable characteristic in that fore-and-aft pitching of the tractor may occur when the implement is above the ground and the quadrant lever is moved to rapidly raise or lower the hitch. Because of its pneumatic tires, the tractor acts as a spring-mass system. Furthermore, as the position and velocity of the hitch changes the weight of the implement is reflected at the draft sensors as an apparent change in draft and the draft sensors falsely indicate the draft. The microprocessor responds to the draft sensor signals by producing an output signal to correct the hitch position. Meanwhile, because of the bounce of the spring-mass system, the apparent draft, as seen by the draft sensors changes. Thus, oscillating draft feedback signals are generated and as the microprocessor responds to the signals by moving the hitch, the pitching motion is propagated and an undesirable vibration of the tractor occurs.

An object of this invention is to provide a method and apparatus for preventing uncommanded hitch movement and preferably uncommanded hitch movement during intervals when hitch movement is not under closed-loop control.

Another preferred object of the invention is to provide a method and apparatus for preventing uncommanded downward hitch movement when the hitch is not captured, during transport, or when the hitch control system is in an external mode which permits control of hitch movement by manual switches.

The present invention is defined in the appended claims and may provide a safety disconnect relay having a contact connected between the hitch valve solenoid and the positive voltage source which powers the solenoid. A microprocessor senses for various conditions under which uncommanded hitch motion should be prevented, and controls the safety disconnect relay to disconnect the valve solenoids from the positive voltage when the conditions are found to exist.

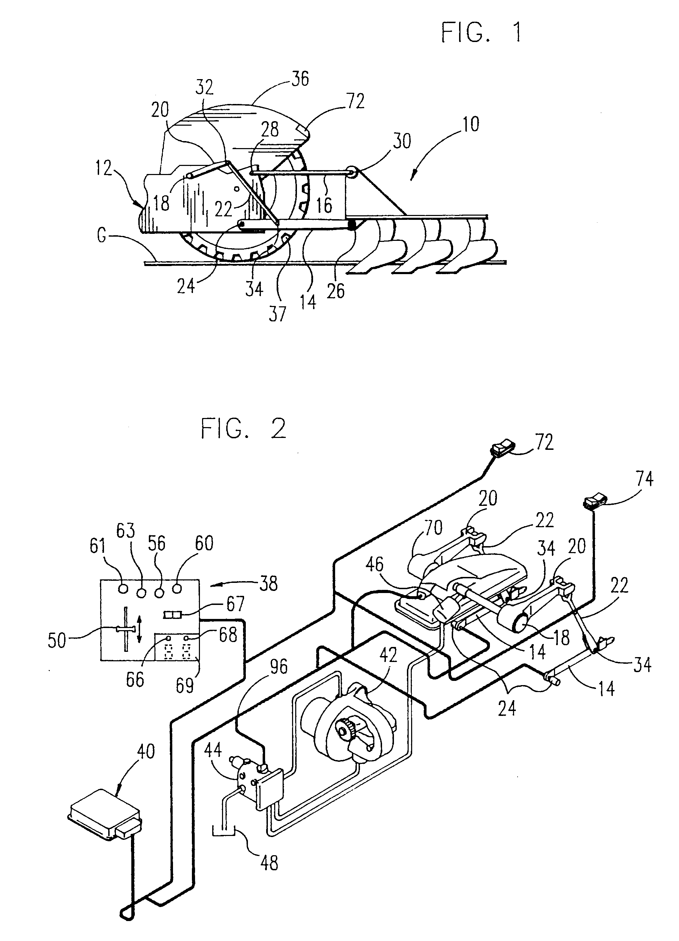

The invention will now be described in greater detail, by way of example, with reference to the accompanying drawings, in which :-Fig. 1 illustrates a tractor-mounted hitch having a tillage implement attached thereto;
Fig. 2 is a schematic view of a three point hitch and an automatic draft control therefor;
Fig. 3 illustrates the control microprocessor and inputs and outputs therefor;
Fig. 4 is a schematic diagram illustrating logic used in the automatic draft control; and,
Figs. 5A and 5B comprise a flow diagram illustrating logic for disabling the hitch upon detection of uncommanded hitch movement.
Fig. 1 illustrates a three-point hitch connecting a moldboard plow or other tillage implement 10 to the rear of a tractor 12. The hitch comprises left and right lower links 14 (Fig. 2), an upper link 16, a rockshaft 18 having crank arms 20 affixed thereto, and left and right adjustable links 22.

The lower links 14 are pivotally attached at one end by pins 24 to a frame member of the tractor, and at the other end links 14 are pivotally attached to the implement 10 by pins 26. Upper link 16 is pivotally attached to a frame member of the tractor by a pin 28, and pivotally attached to implement 10 by a pin 30. Each adjustable link 22 is connected at one end by a pivot pin 32 to a crank arm 20 and connected at the other end by a pivot pin 34 to an intermediate position of a lower link 14.

The position of implement 10 relative to ground G is adjusted by rotating rockshaft 18 through an arc. In Fig. 1, as the rockshaft 18 is rotated counter-clockwise, crank arms 20 act through adjustable links 22 to pivot lower links 14 counter-clockwise about pins 24. As link pins 26 are raised, the upper link 16 prevents the weight of the implement from pivoting the implement downwardly about pins 26, and the upper portion of the implement pivots in an arc whose center is located at pin 28.

Fig. 2 schematically illustrates an automatic draft control system for controlling the movements of the hitch by controlling movement of the rockshaft 18. The control system includes an electronic draft control (EDC) console 38, a microprocessor 40, a pump 42, an electro-hydraulic proportional control valve 44, and a hydraulic lift cylinder 46.

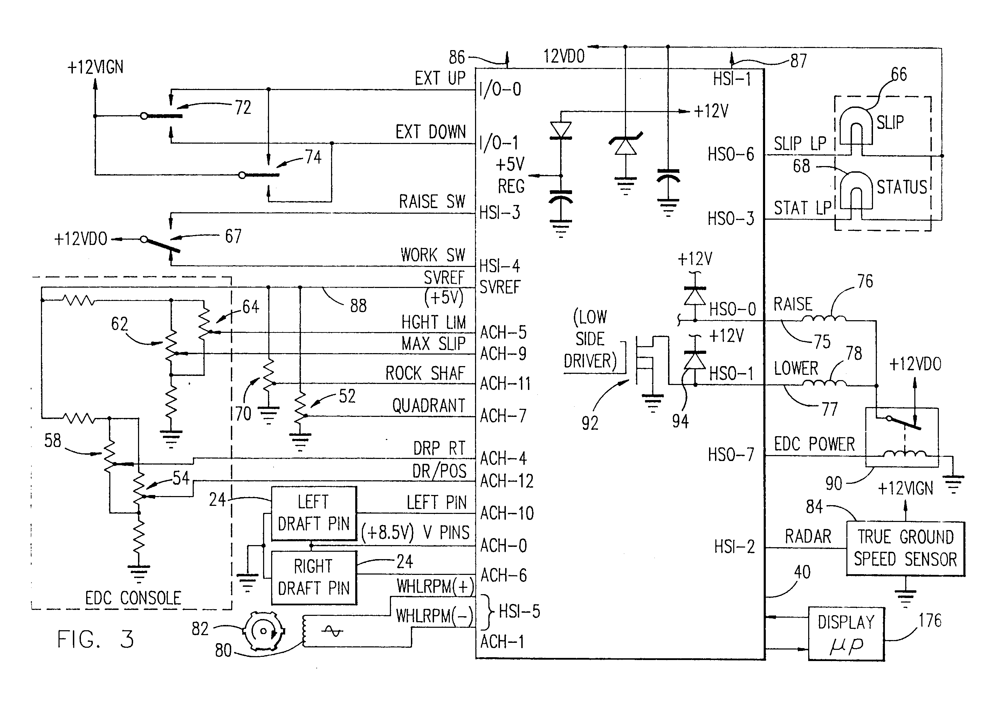

The control console 38 has a hitch lift control or quadrant lever 50 which is pivoted near its lower end. As the lever 50 is moved forwardly or backwardly it actuates a potentiometer 52 (Fig. 3). The quadrant lever is used to control the positioning of the hitch. A stop (not shown) is provided for limiting forward movement of the quadrant lever 50. When the quadrant lever is moved forwardly beyond the stop, it places the control system in an open-loop or external mode which permits use of external fender switches to control positioning of the hitch.

The console also includes a position/draft mix control potentiometer 54 (Fig. 3) operated by a control knob 56 and a drop rate control potentiometer 58 operated by a control knob 60. The purpose of the control potentiometers 54 and 58 is explained below.

A digital display 69 is provided on the console to indicate the relative hitch position. In addition, the EDC console also includes a slip control knob 61 for controlling a maximum slip limit potentiometer 62, a height limit control knob 63 for controlling a height limit potentiometer 64, a slip indicator lamp 66 and an EDC status lamp 68. A work/raise rocker switch 67 is also provided on the console. This switch enables the operator to selectively raise the hitch to the height limit set by control knob 63, or lower the hitch to the position specified by the quadrant lever 50, by merely actuating the switch.

As subsequently explained, the hitch height may be controlled by a variable mix of position and draft signals. This requires that the position of the hitch and the draft be known. Therefore, a rotary potentiometer 70, driven by rockshaft 18, is provided to sense the position of the hitch. The pivot pins 24 are load sensitive pins such as those available from the Robert Bosch company and provide a means for sensing the draft. These pins provide an electrical output signal directly related to the horizontal component of the forces on the lower links 14.

To provide for manual control of the hitch position when attaching or detaching an implement 10, two three-position rocker switches 72 and 74 are mounted on the left and right fenders 36 covering the rear tractor wheels 37. Switches 72 and 74 are rendered operable by first moving the quadrant lever 50 forwardly past the stop position to initiate an external mode of operation. While the system is in the external mode, either switch 72 or 74 may be manipulated to raise or lower the hitch. The external mode, once initiated, remains in effect until the hitch is "recaptured" i.e. the quadrant lever 50 is moved to a position which corresponds (within limits) to the present hitch position.

Generally speaking, microprocessor 40 repeatedly samples the output signals from the various sensors, switches and potentiometers, and produces a pulse width modulated signal for controlling a "raise" solenoid 76 or a "lower" solenoid 78 (Fig. 3) associated with the closed center valve 44. To raise the hitch, fluid pressurized by pump 42 is passed through the valve to extend lift cylinder 46 which rotates rockshaft 18 counter-clockwise. To lower the hitch, the "lower" solenoid is energized to dump fluid from the lift cylinder 46 through valve 44 to sump 48. The hitch falls under its own weight and rotates the rockshaft 18 clockwise to retract the lift cylinder.

Referring now to Fig. 3, the microprocessor 40 may be an EEC-IV module of the type used by Ford Motor Company for automotive engine control. The microprocessor module comprises a type 8061 microprocessor with a 32K byte EPROM and a 16x16 bit E²PROM. The module also includes a plurality of analog input channels with A/D conversion means for converting the analog input signals to digital signals for use in the microprocessor. The outputs of potentiometers 52, 54, 58, 62, 64 and 70 and the draft sensor pins 24 are connected to the analog input channels. The fender switches 72 and 74 and the raise/work switch 67 are connected to digital inputs of the microprocessor.

The microprocessor 40 has a frequency input which is connected to a magnetic sensor 80. This sensor senses teeth on a gear 82 which rotates with the rear wheel axle of the tractor. The sensor produces an output signal at a frequency proportional to the rate of rotation of the axle. This signal is calibrated under zero wheel slip conditions as described in copending Application 709,237 (US-A-5,190,111) so that it may be used as a representation of wheel speed regardless of the effective rolling radius of the wheels. A doppler radar unit 84 is mounted on one side of the tractor and directed toward the ground forwardly of the unit. The radar unit senses true ground speed and applies to the microprocessor signals representing this speed. The wheel (axle) speed sensor and radar output signals are analyzed by the microprocessor to determine the degree of tractor wheel slip.

Power for the microprocessor and control system is derived from the battery of tractor 12. Battery power is continuously applied to microprocessor 40 over lead 86 to power a keep-alive memory in the microprocessor. This memory enables stored data and status information to be retained when the tractor ignition switch (not shown) is off. A voltage + ₁2VIGN is derived from the battery through the ignition switch. The battery also provides a voltage + ₁2VDO through a relay circuit that does not drop out until 8 seconds after the ignition key switch is turned off. This latter voltage is applied to a voltage regulator circuit within the microprocessor 40 to generate a regulated voltage of + 5. This voltage is applied to logic circuits within the microprocessor. In addition, the +5 volt signal is applied over a lead 88 to the potentiometers 52, 54, 58, 62, 64 and 70. A lead 87 is connected to the ignition switch and provides a signal to the microprocessor when the switch is closed.

Insofar as the automatic draft control is concerned, the microprocessor has only five outputs. Two of these outputs are for energizing the slip lamp 66 which is energized when the degree of wheel slip exceeds the limit as set by operator adjustment of potentiometer 62 and a status lamp 68 which indicates if the automatic draft control is active or inactive. Two additional outputs are provided for energizing the raise solenoid 76 and lower solenoid 78 associated with the lift control valve 44. The last output energizes the coil of a safety disconnect relay 90 having a normally closed contact connected between + 12VDO and the raise and lower solenoids 76 and 78.

As shown in Fig. 3, the other side of the lower solenoid 78 is connected through a low side driver 92 to ground, and through a diode 94 to + 12V. The raise solenoid 76 is similarly connected to a further low side driver (not shown). Normally, the relay 90 is not energized so that + 12V is applied through its normally closed contacts to the solenoids 76 and 78. When the hitch is to be lowered, the microprocessor produces a pulse width modulated signal that turns on the driver 92 thus establishing a circuit from + 12V through the solenoid 78 and the driver to ground. The solenoid 78 controls valve 44 so that hydraulic pressure to the lift cylinder 46 is reduced and the hitch drops because of its own weight and the weight of the implement 10. To raise the hitch, the driver for solenoid 76 is turned on to energize the solenoid. The solenoid operates the valve so that fluid under pressure is applied to the lift cylinder from the pump 42.

From Fig. 2, it is evident that the leads 75 and 77 between the microprocessor 40 and the raise and lower solenoids 76 and 78 associated with valve 44 extend from some length through a wiring harness 96. Furthermore, it is evident from Fig. 3 that if the lead 77 should be shorted to ground, the lower solenoid 78 would be energized in the same manner as if the low side driver 92 were turned on. A similar situation exists for the raise solenoid 76 if lead 75 is shorted. As subsequently explained, relay 90 is provided to disable valve 44 and thus inhibit uncommanded downward movement of the hitch as a result of such shorts.

The microprocessor 40 may have additional inputs and outputs permitting it to control the tractor transmission and a tractor performance monitor but these are not shown in Fig. 3 since they are not necessary for an understanding of the present invention.

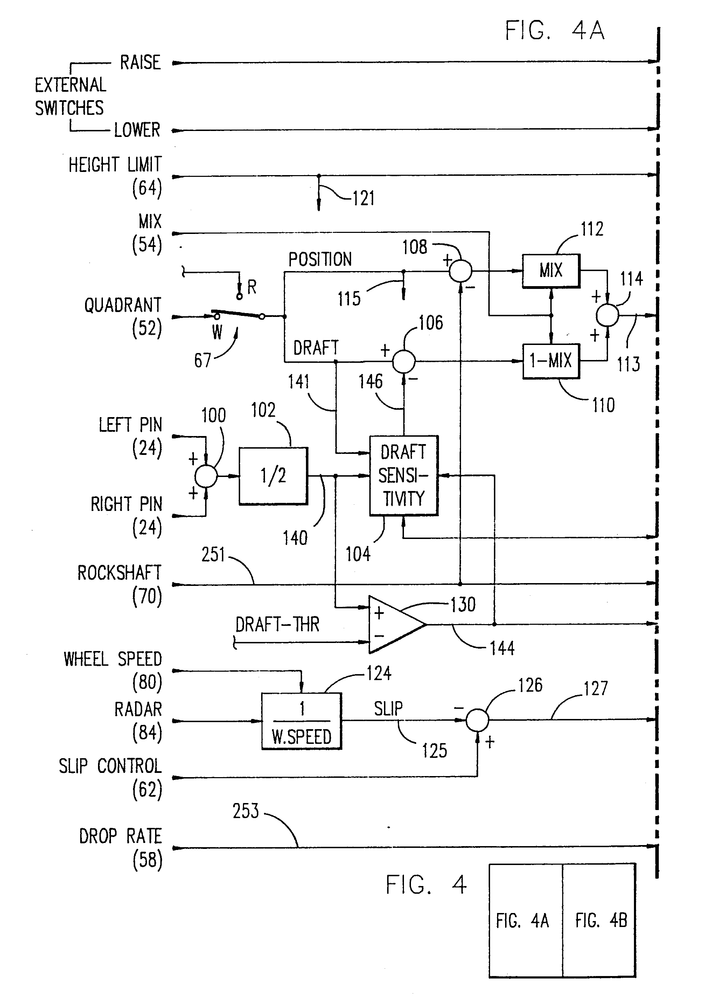

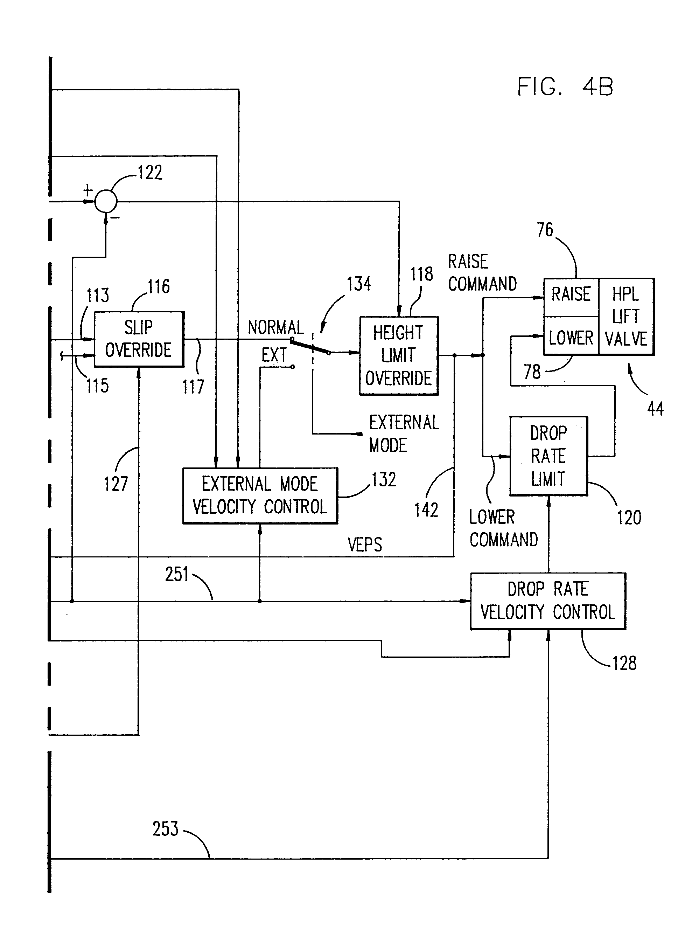

Fig. 4 is a schematic circuit diagram illustrating the logical sequence of operations performed by the program which controls microprocessor 40. These operations need not be performed by a programmed microprocessor but could also be performed by a combination of discrete analog or digital hardware circuits. To simplify the following explanation, the elements of Fig. 4 will be referred to as though they are discrete hardware circuits but it should be understood that in a preferred embodiment the various operations are carried out by circuits within microprocessor 40 as the microprocessor executes a sequence of program instructions.

Most of the input control signals for the automatic draft control are shown at the left of Fig. 4. These signals have been derived by sensing the various potentiometers, sensors and switches and, where appropriate, digitizing the analog signals and then digitally filtering them. Furthermore, the signals may have been subjected to a scaling function prior to the time they appear as input signals in Fig. 4. These operations are conventional and thus are not shown.

After the signals from the right and left draft sensor pins 24 are digitized, compensation made for the static weight of the hitch, and low pass filtered to eliminate frequencies above about 3.2Hz, they are added together by an adder 100 and the sum divided by 2 by a divider 102 to obtain an average composite draft feedback signal COMPDRFT I which is applied to a draft sensitivity control 104 over a path 140. As described in copending Application No. 709,185 (US-A-5,143,159), the draft sensitivity control 104 either applies the signal COMPDRFT_I directly to a subtractor 106, or low pass filters the signal before applying it to the subtractor so that frequencies above 0.5Hz are filtered out. The purpose of the draft sensitivity control is to reduce tractor vibrations which would otherwise occur as the hitch moves in response to a change in the position of quadrant lever 50.

The quadrant lever 50 (Fig. 2) provides single- lever control of both a hitch position command and a draft command. The signal derived from the quadrant lever potentiometer 52 is applied to a contact of the raise/work switch 67 and if the switch is set to the "work" position a digitized signal (Q_EFF) is applied to the draft sensitivity control 104 over a path 141. Q EFF is also subjected to two different shaping functions (not illustrated) to derive a draft command which is applied to a subtractor 106 and a position command which is applied to both the subtractor 108 and a wheel slip override circuit 116. The digitized output of the rockshaft potentiometer 70 is also applied to the subtractor 108 so that the subtractor produces an output proportional to the difference between the hitch position as commanded by the quadrant lever 50 and the actual hitch position as sensed by the rockshaft potentiometer 70. In like manner, the output of subtractor 106 represents the difference between the draft as commanded by the quadrant lever 50 and the actual draft as sensed by the draft sensor pins 24.

The difference values obtained by subtractors 106 and 108 are fed to two mix determining circuits 110 and 112, respectively, where the output of subtractor 108 is multiplied by a mix factor determined by the setting of mix potentiometer 54. The output of the mix potentiometer is scaled to represent a value in the range of 0.3 to 1.0. The output of the subtractor 106 is multiplied by one minus the mix factor. The resulting values obtained at 110 and 112 are then summed by an adder 114.

The value derived by adder 114 may be subjected to slip override modification at 116 or height limit override modification at 118 before it is utilized to generate a pulse width modulated signal for application to the raise or lower solenoid 76 or 78 associated with the lift valve 44. In addition, if the output at 118 calls for lowering the hitch, the "lower" command may be further modified at 120 to limit the rate at which the hitch is lowered.

Since operation of the lift valve 44 changes the position of the hitch relative to the ground, and thus the position of the rockshaft, and the depth to which the implement penetrates the ground affects the signals generated by draft sensor pins 24, it is seen that Fig. 4 illustrates two inter-dependent closed-loops, a position feedback loop and a draft feedback loop, with the input control for both loops being derived from the quadrant lever 50 and the control signals being weighted by the setting of the mix potentiometer 54. The above-referenced SAE Technical Paper No. 901561 describes a draft/position feedback loop of this type.

The height limit potentiometer 64 enables the operator to manually select the maximum height to which the hitch may be raised. A subtractor 122 subtracts the signal derived from the rockshaft potentiometer 70 from the signal derived from potentiometer 64. As the hitch approaches the selected height limit the raise command at the output of circuit 118 is forced to zero.

The slip override circuit 116 is controlled by the outputs of radar unit 84, wheel speed sensor 80, the draft command from the quadrant lever, and the slip control potentiometer 62. The radar unit measures true ground speed (TGS) while the sensor 80 measures nominal wheel speed. After correction of the nominal wheel speed value as subsequently described, the true ground speed is divided by the wheel speed (W_SPEED) at 124 to compute the degree of wheel slip. The slip value is compared at 126 with a maximum permissible slip value set by the operator on slip control potentiometer 62. When actual slippage exceeds the selected maximum, a signal is produced on path 127 which modifies the value in the main control loop so that the hitch is raised. This lifts the implement 10 relative to the ground so as to place a smaller load on the tractor, and this in turn reduces wheel slip.

The purpose of the drop rate velocity control circuit 128 is to limit the rate at which the hitch is lowered. This rate may be manually selected by the operator by adjusting the drop rate potentiometer 58. Circuit 128 continuously adjusts the valve "lower" command at 120 to maintain a desired hitch velocity. The operation of the drop rate velocity control circuit is explained in copending Applications Nos. 709,184 and 757,173 (US-A-5,320,186). The drop rate velocity control function is inhibited when the implement is in the ground so that the hitch may respond quickly and properly to the draft correction signal derived at 118. The compensated draft signal derived at 102 is applied over path 140 to a comparator 130 where it is compared with a threshold value. When the draft signal exceeds the draft threshold value (the implement is in contact with the ground) the comparator produces a signal on path 144 to inhibit drop rate velocity control circuit 128.

The external mode velocity control circuit 132 is responsive to output signals from the external fender switches 72, 74 for controlling the raising or lowering of the hitch under operator control at a constant velocity. This facilitates connection or separation of implements from the hitch. As explained in copending Applications Nos. 709,184 and 757,173 (US-A- 5,320,186), circuit 132 regulates hitch movement according to an integral velocity control algorithm which provides consistent, slow and safe operation. The command issued to valve 44 is limited to maintain a constant rate of lift movement thereby compensating for variations in implement weight, system temperature, pilot pressure and valve performance.

The external mode velocity control circuit 132 is enabled only by moving the quadrant lever 50 forward beyond a stop position so as to generate the External Mode command. In Fig. 4, this operation is equivalent to a switch as illustrated at 134. When the system is in the External Mode, the feedback control loop is open and the output of the circuit 132 is applied to the height limit override circuit 118. Normal closed-loop operation is restored by capturing the hitch by moving the quadrant lever 50 away from the "external mode" stop position to generate a position command corresponding to the current position of the hitch.

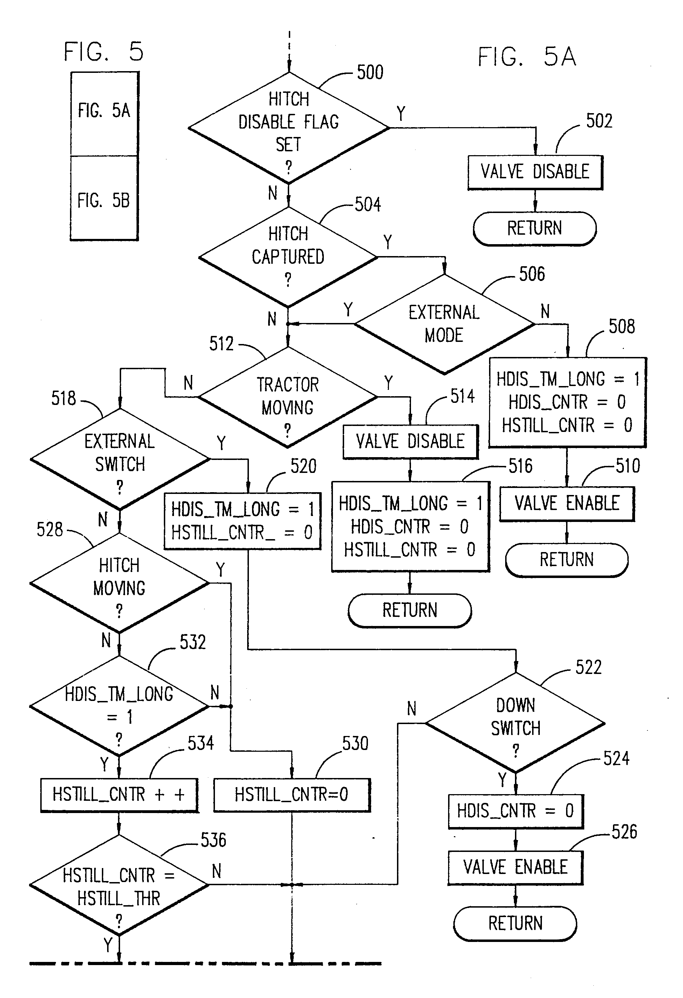

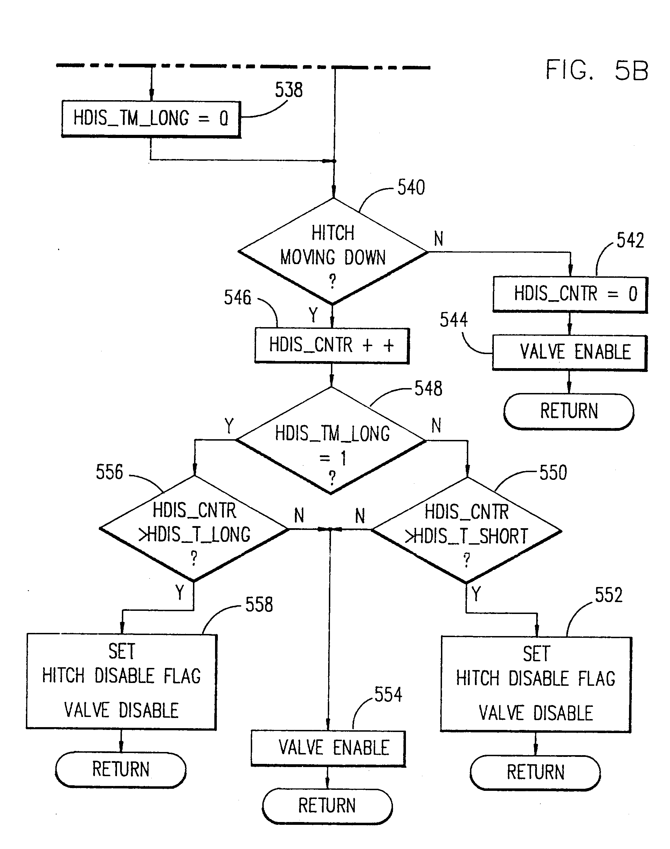

As previously explained with reference to Fig. 3, the safety disconnect relay 90 is provided to disable operation of the hitch valve 44 and thereby prevent uncommanded downward movement of the hitch when the system is not in its normal closed-loop mode. This may either be at start-up when the hitch is not captured, or when the external mode is selected so that the fender switches 72 and 74 may be used. Figs. 5A and 5B comprise a flow diagram of a routine executed by microprocessor 40 to control the relay 90 and thereby prevent hitch movement.

The routine is periodically executed as part of the overall microprocessor program when the program branches to step 500. At this point a Hitch Disable flag is tested. This flag is normally reset but is set to permanently disable the hitch. Once the flag is set it may be reset only by turning the tractor ignition key off and then on. If the test at step 500 shows that the Hitch Disable flag is set, the routine moves to step 502 where the hitch valve 44 is disabled, that is, relay 90 is energized to remove power from relays 76 and 78 thereby preventing operation of the valve. The routine then returns to the main program routine.

If the test at step 500 proves false, then a Hitch Captured flag is tested at step 504. This flag is set when the hitch is captured and reset when the quadrant lever 50 is moved forwardly of the stop position so as to initiate the External Mode. The flag is also reset on start-up if the hitch position as sensed by rockshaft potentiometer 70 is not the same (within limits) as the position commanded by the position of the quadrant lever 50.

If the hitch is captured, the test at step 504 proves true and the routine tests the External Mode flag at step 506. This flag is set when the quadrant lever 50 is moved forwardly of its stop position. If the hitch is captured and the External Mode flag is not set it means that the hitch is operating under normal closed-loop control. Any uncommanded hitch motion occurring under these conditions will be automatically corrected by the closed-loop control selectively energizing the raise and lower valve solenoids 76 and 78. Therefore, after setting a flag HDIS_TM_LONG and clearing two counters (HDIS_CNTR and HSTILL_CNTR) at step 508, the microprocessor deenergizes relay 90 at step 510 so as to apply voltage to solenoids 76 and 78 and thus enable the valve 44. It will be understood that this merely enables the valve solenoids, the solenoids actually being energized by the closed-loop position error signal produced by the height limit override circuit 118. After relay 90 is deenergized, the routine returns to the main program.

If the test at step 504 proves false, or if the tests at steps 504 and 506 both prove true, step 512 senses the output of wheel speed sensor 80 to determine if the tractor is moving. If it is, the hitch valve is disabled at step 514. Because the operator can't control the hitch without capturing it and can't use the external switches 72, 74 when the tractor is moving, this is a safety precaution which is transparent to the operator.

After the valve is disabled; the flag HDIS TM LONG is set and the counters HDIS - CNTR and HSTILL - CNTR are reset at step 516 before the routine returns to the main program.

Briefly, the routine looks for uncommanded hitch movement if the test at step 512 proves false. Uncommanded movement is defined as downward movement of the hitch which is not being commanded by actuation of one of the fender switches 72, 74 to the "down" position. Because of the system dynamics and the response times of the mechanical elements, the routine does not respond to an uncommanded movement unless that movement persists for a predetermined period of time. A counter HDIS CNTR is used to measure the time period. When uncommanded motion occurs, the counter is incremented at step 546 (Fig. 5B) each time the routine of Figs. 5A and 5B is executed.

The predetermined time period during which uncommanded hitch movement must persist before the hitch valve is disabled may have one of two values HDIS_T_SHORT and HDIS_T_LONG. When the hitch is moving, dynamic effects of the system are more likely to cause false triggering of the valve disable logic. Therefore, in this instance the count in counter HDIS CNTR is compared with the larger value HDIS_T_LONG (step 556) to determine when the uncommanded hitch motion signal has persisted long enough to require that the hitch value be disabled.

On the other hand, when the hitch has been still (not moving) for at least a given interval of time before the detected motion began, it is unlikely that dynamic effects are causing false triggering of the valve disable logic. Therefore, to obtain a fast response for stopping uncommanded hitch motion the contents of counter HDIS CNTR are compared (step 550) with the value HDIS_T_SHORT to determine if the hitch motion should be stopped.

A counter HSTILL CNTR measures intervals during which the hitch is not moving. This counter is incremented at step 534 and when it reaches a threshold interval HSTILL THR (step 536) it resets to zero a flag HDIS_TM_LONG (step 538). This flag is used to define whether the counter HDIS CNTR is to be compared with the short interval value HDIS_T_SHORT or the long interval value HDIS_T_LONG. When the flag HDIS TM LONG is reset (0) the short interval value is used and when it is set (1) the long value is used.

At step 518, a test is made to see if either of the fender switches 72, 74 is actuated. If one of the switches is actuated the flag HDIS_TM_LONG is set and the counter HSTILL CNTR is reset at step 520. At step 522 the switches are tested to see if either one commands downward hitch motion. If downward motion is commanded the hitch valve should be enabled, that is, relay 90 de-energized. HDIS_CNTR is reset at step 524 and the valve enabled at step 526 before the routine returns to the main program routine.

If neither fender switch is in the "down" position, the routine moves from step 522 to step 540 (Fig. 5B) where the output of the rockshaft potentiometer 70 is differentiated and tested to see if the hitch is moving down. If the hitch is not moving down, the counter HDIS CNTR is reset at step 542 and the hitch valve is enabled at step 544 before the routine returns to the main program.

If the test at 518 shows that neither of the external fender switches 72, 74 is actuated, the routine differentiates the output of rockshaft potentiometer 70 at step 528 to see if the hitch is moving. Assuming for the moment that the hitch is not moving, the routine moves to step 532.

The purpose of steps 532, 534, 536 and 538 is to control incrementing of the hitch still counter HSTILL_CNTR and the resetting of the flag HDIS TM LONG to zero when the hitch has not moved for an interval of time defined by the constant HSTILL THR. Later, when step 548 is executed, the state of HDIS_TM_LONG determines whether HDIS_T_LONG or HDIS_T_SHORT will be used for determining if an uncommanded hitch movement has persisted long enough to be acted on.

Assume for purposes of illustration that HDIS_TM_LONG = 1 when step 532 is executed. The routine increments HSTILL_CNTR at step 534 and at step 536 HSTILL_CNTR is compared with HSTILL_THR. Assuming HSTILL_CNTR is less than HSTILL THR the routine branches to step 540 where a test is made to see if the hitch is moving downwardly. Assuming it is not, steps 542 and 544 are executed and the hitch valve is enabled as previously described.

As long as conditions remain unchanged, HSTLL_CNTR is incremented at step 534 each time the routine of Figs. 5A and 5B is executed. Eventually HSTILL_CNTR is incremented until it is equal to HSTILL_THR and when this condition is detected at step 536, the flag HDIS_TM_LONG is reset at step 538 before the routine executes step 540. This means that if uncommanded downward hitch movement is later detected, then HDIS_T_SHORT is compared with the contents of HDIS_CNTR to see if the movement has persisted long enough to require that the hitch valve is disabled.

Returning now to step 528, if the test indicates that the hitch is moving, the movement is not a commanded movement. The routine resets HSTILL_CNTR at step 530 and moves to step 540 where a test is made to see if the rockshaft movement is in the downward direction. If the motion is upwardly, steps 542 and 544 are executed as previously described and the hitch valve is enabled.

It should be noted that although the movement detected at step 528 was not the result of a command from the external switches, the hitch valve is still enabled if the movement, as detected at step 540 is upward movement. The routine disables the hitch valve only upon detection of uncommanded downward hitch motion. Provision might also be made to inhibit uncommanded upward hitch movement. However, external mechanical action on the hitch, such as might occur during transport or when hitching or unhitching an implement, causes false triggering of the logic thus making it impractical to include uncommanded movement detection in the raise direction. Also, the single acting cylinder 46 would have to be replaced with a double acting cylinder.

If the test at step 540 indicates that the uncommanded motion is in the downward direction, HDIS_CNTR is incremented at step 546 and the flag HDIS_TM_LONG is tested at step 548.

Assuming that HDIS_TM_LONG is set, indicating that the hitch was not motionless for at least the interval HSTILL THR prior to detection of the present motion, the routine branches to step 556 where HDIS CNTR is compared with HDIS_T_LONG to see if HDIS_CNTR is greater. On the other hand, if the test at step 548 shows that HDIS_TM_LONG is not set, indicating that prior to detection of the present motion the hitch was motionless for at least the interval HSTILL THR, the routine moves to step 550 where HDIS CNTR is compared with HDIS T SHORT.

If the test at step 556 (or 550) proves false, it means that the detected downward movement has not persisted long enough to be classified as a valid downward movement. The program thus moves to step 544 to enable the hitch valve before returning to the main routine.

The next time the routine of Figs. 5A and 5B is executed, and assuming no changes in conditions, HDIS_CNTR is incremented and again compared with either HDIS T LONG or HDIS_T SHORT depending on whether HDIS_TM_LONG is set or reset. These actions are repeated as long as conditions remain unchanged. Eventually, depending on the state of HDIS_TM_LONG at step 548, HDIS CNTR will prove greater than HDIS_T_LONG at step 556 or greater than HDIS_T_SHORT at step 550. In the former case, the Hitch Disable flag is set and the hitch valve disabled at step 558 and in the latter case these same actions are performed at step 552.

Once the Hitch Disable flag is set and the hitch valve is disabled at step 552 or 558, the hitch valve is permanently disabled until the tractor ignition is switched off and then on. If the ignition is not switched off, each time the routine of Fig. 5A is entered, step 500 detects that the flag is set so the routine branches to step 502 to insure that the hitch valve is disabled and then returns to the main routine.

From the foregoing description it is seen that the present invention provides a simple and inexpensive method and apparatus for eliminating uncommanded downward hitch movement. While a specific preferred embodiment has been described by way of illustration, it will be understood that various modifications and substitutions may be made in the described embodiment without departing from the scope of the invention as defined in the appended claims. For example, the safety disconnect relay need not be an electromechanical relay but may be an electronic relay.

## Claims

1. A method of controlling a hitch system having a valve (44) for controlling movement of a hitch (14) mounted on a vehicle and solenoid means (76,78) connected in a series circuit with a switch means (92) across a source of voltage, the switch means (92) being selectively energized to energize the solenoid means (76,78) by closing said series circuit, said hitch control system including circuit means operable in a closed-loop mode to control positioning of the hitch to a position specified by a position command or operable in an open-loop mode to control movement of the hitch (14) in response to actuation of a manual switch (72,74), the method comprising the steps of:
providing a safety disconnect switch (90) for selectively opening the series circuit;
determining if the hitch (14) is captured;
determining if the circuit means is in the open-loop mode;
sensing for movement of the hitch (14);
sensing for actuation of a manual switch (72,74); and,
when hitch movement is detected and no manual switch is actuated, energizing said safety disconnect switch if the hitch is not captured or the circuit means is in the open-loop mode, whereby uncommanded motion of the hitch when the circuit means is operating in the open-loop mode is prevented.

2. A method as claimed in claim 1 and further comprising:
sensing movement of the vehicle; and,
energizing the safety disconnect switch (90) when said vehicle is moving and either the hitch is not captured or the circuit means is in the open-loop mode.

3. A method as claimed in claim 1 or 2, wherein the safety disconnect switch (90) is energized only when the hitch movement detected is downward movement.

4. A method as claimed in any of claims 1 to 3, wherein the safety disconnect switch (90) is energized only when the hitch movement detected persists for at least a threshold period of time.

5. A method as claimed in any of claims 1 to 3, wherein the safety disconnect switch (90) is energized only when the hitch movement detected persists for at least a first threshold period of time after the hitch has been still for at least a fixed interval, or persists for at least a second threshold period of time greater than said first threshold period if the hitch has not been still for at least said fixed interval.

6. A method according to any of the preceding claims and comprising the further steps of:
providing a feedback loop including draft sensing means (24) for sensing the draft on the hitch and producing a draft signal; deriving from the draft signal and the command signal an error signal for controlling movement of the hitch;
low pass filtering the draft signal before applying it to the error determining means to eliminate therefrom signal variations caused by the weight of the hitch and implement attached thereto variably acting on the draft sensing means as the vehicle bounces.

7. A method as claimed in claim 6, wherein the filtering of the draft signal is initiated only when the command signal changes, and is terminated as the hitch position approaches the commanded position.

8. A method as claimed in claim 6, wherein the filtering of the draft signal is initiated only when the rate of change of the command signal exceeds a threshold value.

9. A method as claimed in any of claims 6 to 8, wherein the draft signal is not filtered when the implement is in contact with the ground.

10. A hitch control system having a valve (44) for controlling movement of a hitch (14) mounted on a vehicle and solenoid means (76,78) connected in a series circuit with a switch means (92) across a source of voltage, the switch means (92) being selectively energized to energize the solenoid means (76,78) by closing said series circuit, said hitch control system including circuit means operable in a closed-loop mode to control positioning of the hitch (14) to a position specified by a position command or operable in an open-loop mode to control movement of the hitch in response to actuation of a manual switch (72,74), and apparatus of preventing uncommanded motion of the hitch when the circuit means is operating in the open-loop mode, said apparatus comprising:
a safety disconnect switch (90) for selectively opening the series circuit;
first means for determining if the hitch is captured;
second means for determining if the circuit means is in the open-loop mode;
third means for sensing for movement of the hitch;
fourth means for sensing for actuation of a manual switch; and,
fifth means responsive to said first, second, third and fourth means for energizing said safety disconnect switch when hitch movement is detected and no manual switch is actuated if the hitch is not captured, or the circuit means is in the open-loop mode.

11. A system as claimed in claim 10 and further comprising:
sixth means for sensing movement of the vehicle, said fifth means being responsive to said sixth means for energizing the safety disconnect switch when said vehicle is moving and either the hitch is not captured or the circuit means is in the open-loop mode.

12. A system as claimed in claim 10 or 11, wherein the fifth means includes means for energizing the safety disconnect switch (90) only when the hitch movement detected by said third means is downward movement.

13. A system as claimed in claim 10 or 11, wherein said fifth means includes means for energizing the safety disconnect switch (90) only when the hitch movement detected by said third means persists for at least a threshold period of time.

14. A system as claimed in claim 10 or 11, wherein said fifth means includes:
a first counter for tolling intervals during which the hitch is still;
means for setting an indicator to one of two states when the count in first counter reaches a predetermined value;
a second counter for tolling intervals during which uncommanded motion of the hitch persists;
first and second comparator means comparing the count in said second counter with first and second threshold values, respectively, depending upon the state of said indicator.

15. A method of controlling a hitch system having a valve (44) for controlling movement of a hitch (14) mounted on a vehicle and solenoid means (76,78) connected in a series circuit with a switch means (92) across a source of voltage, the switch means (92) being selectively energized to energize the solenoid means (76,78) by closing said series circuit, said hitch control system including circuit means operable in a closed-loop mode to control positioning of the hitch (14) to a position specified by a position command or operable in an open-loop mode to control movement of the hitch (14) in response to actuation of a manual switch (72,74), the method comprising the steps of:
providing a safety disconnect switch (90) for selectively disconnecting the solenoid means (76,78) from the positive voltage;
determining if the hitch is captured;
determining if the circuit means is in the open-loop mode;
sensing for movement of the vehicle and;
when vehicle movement is detected, energizing said safety disconnect switch if the hitch is not captured or the circuit means is in the open-loop mode, whereby uncommanded motion of the hitch during transport is prevented.

16. A system according to any of claims 10 to 15, and further comprising draft sensing means (24) for producing a draft feedback signal representative of hitch draft;
error determining means responsive to said draft command signal and said draft feedback signal for producing a position error signal;
means responsive to said position error signal for moving the hitch toward the position commanded, and
draft sensitivity control means responsive to changes in said draft command signal for low pass filtering said draft feedback signal before it is applied to said error determining means.

17. A system according to claim 16, wherein the draft sensitivity control means includes a first order low pass filter means with a cut-off frequency of 0.5Hz and said filter means is responsive to said draft feedback signal for supplying to the error determining means a low pass filtered draft feedback signal.

18. A system according to claim 16 or 17, wherein the hitch supports a tillage implement, and wherein means are provided for inhibiting the filtering of said draft feedback signal when the implement is in contact with the ground.

19. A system as claimed in any of claims 16 to 18 and further including means for determining the rate of change of the draft command signal, the draft signal being filtered only if the rate of change of the position signal exceeds a threshold value.

20. A system according to any of claims 16 to 18, wherein the draft signal is filtered only when the command signal changes and filtering is terminated as the hitch approached the commanded position.

21. A system according to any of claims 10 to 20 and further comprising modifier means (184) for modifying the position signal in accordance with the degree of slip of the vehicle wheels, slip signal generating means (124,126) for generating a slip signal corresponding to the degree of wheel slip, the slip signal generating means including a sensor (80,82) for sensing the rate of rotation of the vehicle wheels, and a radar unit (84) mounted at a side of the vehicle for sensing true ground speed, the system further comprising:
slip signal control means (116) for selectively applying said slip signal to said modifier means (184), said slip signal control means including means (182,190) for preventing application of the slip signal to the modifier means when the position command commands positioning of the hitch higher than a threshold height.

22. A system according to any of claims 10 to 21 and further comprising wheel speed correction factor determining means comprising means (80,82) for producing a nominal wheel speed signal by sensing rotation of the rear axle of the vehicle, and a radar unit (84) producing a signal representing the true ground speed of the vehicle, said wheel speed correction factor determining means comprising:
divider means (40) for dividing said true ground speed signal by said nominal wheel speed signal to produce a signal representing a wheel speed correction factor; and,
means (40) automatically enabling said divider means when said hitch is raised above a threshold level and the signal representing true ground speed indicates that the vehicle is travelling at greater than a threshold speed.

23. A method according to any of claims 1 to 9 or claim 15, having modifier means (184) for modifying the position signal in accordance with the degree of slip of the vehicle wheels, slip signal generating means (80,82,84) for generating a slip signal corresponding to the degree of wheel slip, the slip signal generating means including a sensor (80,82) for sensing the rate of rotation of the vehicle wheels and a sensor unit (84) mounted at a side of the vehicle for sensing true ground speed, the method comprising the further steps of:
as the vehicle approaches a headland, modifying the position command to command raising of the hitch (14) above a threshold height,
inhibiting application of the slip signal to the modifier means (184) when the position command commands a hitch position above said threshold height;
as the vehicle completes a turn, modifying the position command to command lowering of the hitch;
determining when the implement engages the ground as the hitch is lowered; and,
reapplying the slip control signal to the modifier means when it is determined that the implement has engaged the ground.
whereby modification of the position signal by the slip signal during intervals the vehicle is being turned in a headland is prevented.

24. A method according to any of claims 1 to 9, or claim 15, wherein the system has means for automatically determining a wheel speed correction factor in a system having a sensor (84) for sensing the true ground speed of a vehicle and producing a first signal representative thereof and a sensor (80,82) for sensing the rate of rotation of the vehicle wheels and producing a second signal representative thereof, said vehicle carrying a hitch (14) having an implement attached thereto, said method comprising the further steps of:
determining when the implement does not engage the ground and the speed of the vehicle is greater than a threshold speed; and,
while the hitch is raised and the true ground speed of the vehicle is greater than the threshold speed, dividing said first signal by said second signal to obtain a correction signal.

## Patentansprüche

1. Verfahren zur Steuerung eines Anhängekupplungssystems mit einem Ventil (44) zur Steuerung der Bewegung einer an einem Fahrzeug befestigten Anhängekupplung (14) und einer Betätigungsmagnetspuleneinrichtung (76,78), die in einem Serienkreis mit einer Schaltereinrichtung (92) längs einer Spannungsquelle angeschaltet ist, wobei die Schaltereinrichtung (92) selektiv angesteuert wird, um die Betätigungsmagnetspuleneinrichtung (76, 78) durch Schließen des Serienkreises anzusteuern, wobei das Anhängekupplungs-Steuersystem eine Schaltungseinrichtung einschließt, die in einer Regelkreisbetriebsart betreibbar ist, um die Positionierung der Anhängekupplung auf eine Position zu regeln, die durch einen Positionsbefehl festgelegt ist, oder die in einer Steuerbetriebsart mit offenem Regelkreis betreibbar ist, um die Bewegung der Anhängekupplung (14) in Abhängigkeit von der Betätigung eines manuellen Schalters (72,74) zu steuern, wobei das Verfahren die folgenden Schritte umfaßt:
Vorsehen eines Sicherheitstrennschalters (90) zum selektiven Öffnen des Serienkreises,
Feststellung, ob die Anhängekupplung (14) eingeregelt ist,
Bestimmung, ob sich die Schaltungseinrichtung in der Steuerbetriebsart mit offenem Regelkreis befindet,
Messung, ob sich die Anhängekupplung (14) bewegt,
Messen, ob eine manueller Schalter (72,74) betätigt ist, und
wenn eine Anhängekupplungs-Bewegung festgestellt wird und kein manueller Schalter betätigt ist, Ansteuerung des Sicherheitstrennschalters, wenn sich die Anhängekupplung nicht im eingeregelten Zustand befindet oder wenn sich die Schaltungseinrichtung in der Steuerbetriebsart mit offener Schleife befindet, wodurch eine ungesteuerte Bewegung der Anhängekupplung verhindert wird, wenn sich die Schaltungseinrichtung in der Steuerbetriebsart mit offenem Regelkreis befindet.

2. Verfahren nach Anspruch 1, das weiterhin
die Messung einer Bewegung des Fahrzeuges, und
die Ansteuerung des Sicherheitstrennschalters (90) umfaßt, wenn sich das Fahrzeug bewegt und entweder die Anhängekupplung sich nicht im eingeregelten Zustand befindet oder die Schaltungseinrichtung sich in der Steuerbetriebsart mit offenem Regelkreis befindet.

3. Verfahren nach Anspruch 1 oder 2, bei dem der Sicherheitstrennschalter (90) nur dann angesteuert wird, wenn die festgestellte Bewegung der Anhängekupplung eine Abwärtsbewegung ist.

4. Verfahren nach einem der Ansprüche 1 bis 3, bei dem der Sicherheitstrennschalter (90) nur dann angesteuert wird, wenn die festgestellte Bewegung der Anhängekupplung für zumindestens eine Schwellenwert-Zeitperiode andauert.

5. Verfahren nach einem der Ansprüche 1 bis 3, bei dem der Sicherheitstrennschalter (90) nur dann angesteuert wird, wenn die festgestellte Bewegung der Anhängekupplung über zumindestens eine erste Schwellenwert-Zeitperiode nach dem Stillstand der Anhängekupplung über zumindestens ein festes Intervall andauert oder über zumindestens eine zweite Schwellenwert-Zeitperiode andauert, die größer als die erste Schwellenwertperiode ist, wenn sich die Anhängekupplung nicht über zumindestens das feste Intervall im Stillstand befunden hat.

6. Verfahren nach einem der vorhergehenden Ansprüche, mit den weiteren Schritten der:
Schaffung einer Regelkreisschleife, die eine Zugkraft-Meßeinrichtung (24) einschließt, die die auf die Anhängekupplung einwirkende Zugkraft mißt und ein Zugkraftsignal erzeugt, und Ableitung eines Fehlersignals aus dem Zugkraftsignal und dem Befehlssignal zur Steuerung der Bewegung der Anhängekupplung,
Tiefpaßfilterung des Zugkraftsignals vor dessen Zuführung an die den Fehler bestimmende Einrichtung, um aus diesem Signal Schwankungen zu entfernen, die durch das Gewicht der Anhängekupplung und des daran befestigten Anbaugerätes hervorgerufen werden und in veränderlicher Weise auf die Zugkraft-Meßeinrichtung einwirken, während das Fahrzeug eine sprunghafte Bewegung ausführt.

7. Verfahren nach Anspruch 6, bei dem die Filterung des Zugkraftsignals nur dann eingeleitet wird, wenn sich das Befehlssignal ändert, und daß die Filterung beendet wird, wenn sich die Anhängekupplungsposition der Befehlsposition nähert.

8. Verfahren nach Anspruch 6, bei dem die Filterung des Zugkraftsignals nur dann eingeleitet wird, wenn die Änderungsgeschwindigkeit des Befehlssignals einen Schwellenwert übersteigt.

9. Verfahren nach einem der Ansprüch 6 bis 8, bei dem das Zugkraftsignal nicht gefiltert wird, wenn sich das Anbaugerät in Kontakt mit dem Boden befindet.

10. Anhängekupplungs-Regelsystem mit einem Ventil (44) zur Steuerung der Bewegung einer auf einem Fahrzeug befestigten Anhängekupplung (14) und mit einer Magnetspulenbetätigungseinrichtung (76, 78), die in einen Serienkreis mit einer Schaltereinrichtung (92) längs einer Spannungsquelle eingeschaltet ist, wobei die Schaltereinrichtung (92) selektiv angesteuert wird, um die Betätigungsmagnetspuleneinrichtung (76,78) durch Schließen des Serienkreises anzusteuern, wobei das Anhängekupplungs-Regelsystem eine Schaltungseinrichtung einschließt, die in einer Regelkreis-Betriebsart zur Steuerung der Positionierung der Anhängekupplung (14) auf eine Position betreibbar ist, die durch einen Positionsbefehl bestimmt ist, oder die in einer Steuerbetriebsart mit offenem Regelkreis betreibbar ist, um die Bewegung der Anhängekupplung in Abhängigkeit von der Betätigung eines manuellen Schalters (72, 74) zu steuern, und wobei eine Vorrichtung zur Verhinderung einer ungesteuerten Bewegung der Anhängekupplung vorgesehen ist, wenn die Schaltungseinrichtung in der Steuerbetriebsart mit offenem Regelkreis arbeitet, wobei die Vorrichtung folgende Teile umfaßt:
einen Sicherheitstrennschalter (90) zum selektiven Öffnen des Serienkreises,
erste Einrichtungen zur Feststellung, ob die Anhängekupplung eingeregelt ist,
zweite Einrichtungen zur Bestimmung, ob die Schaltungseinrichtung sich in der Steuerbetriebsart mit offenem Regelkreis befindet,
dritte Einrichtungen zur Messung, ob sich die Anhängekupplung bewegt,
vierte Einrichtungen zur Messung, ob ein manueller Schalter betätigt ist, und
fünfte Einrichtungen, die auf die ersten, zweiten, dritten und vierten Einrichtungen ansprechen, um den Sicherheitstrennschalter zu betätigen, wenn eine Bewegung der Anhängekupplung festgestellt wird und kein manueller Schalter betätigt ist, wenn die Anhängekupplung nicht eingeregelt ist oder wenn sich die Schaltungseinrichtung in der Steuerbetriebsart mit offenem Regelkreis befindet.

11. System nach Anspruch 10, das weiterhin folgende Teile umfaßt:
sechste Einrichtungen zur Messung einer Bewegung des Fahrzeuges, wobei die fünften Einrichtungen auf die sechsten Einrichtungen ansprechen, um den Sicherheitstrennschalter zu betätigen, wenn sich das Fahrzeug bewegt und entweder die Anhängekupplung nicht eingeregelt ist oder die Schaltungseinrichtung sich in der Steuerbetriebsart mit offenem Regelkreis befindet.

12. System nach Anspruch 10 oder 11, bei dem die fünfte Einrichtung eine Einrichtung zur Ansteuerung des Sicherheitstrennschalters (90) nur dann einschließt, wenn die von der dritten Einrichtung festgestellte Bewegung der Anhängekupplung eine Abwärtsbewegung ist.

13. System nach Anspruch 10 oder 11, bei dem die fünfte Einrichtung Einrichtungen zur Ansteuerung des Sicherheitstrennschalters (90) nur dann einschließt, wenn die von der dritten Einrichtung festgestellte Bewegung der Anhängekupplung über zumindestens eine Schwellenwertzeitperiode andauert.

14. System nach Anspruch 10 oder 11, bei dem die fünfte Einrichtung folgende Teile einschließt:
einen ersten Zähler zur Abmessung von Intervallen, während deren sich die Anhängekupplung im Stillstand befindet,
eine Einrichtung zum Einstellen eines Anzeigers auf einen von zwei Zuständen, wenn die Zählung in dem ersten Zähler einen vorgegebenen Wert erreicht,
einen zweiten Zähler zur Abmessung von Intervallen, während deren einen ungesteuerte Bewegung der Anhängekupplung andauert,
erste und zweite Vergleichereinrichtungen, die die Zählung in dem zweiten Zähler mit den ersten bzw. zweiten Schwellenwert in Abhängigkeit von dem Zustand des Anzeigers vergleichen.

15. Verfahren zur Regelung eines Anhängekupplungssystems mit einem Ventil (44) zur Steuerung der Bewegung einer auf einem Fahrzeug befestigten Anhängerkupplung (14) und mit Betätigungsmagnetspuleneinrichtungen (76,70), die in einen Serienkreis mit einer Schaltereinrichtung (92) längs einer Spannungsquelle eingeschaltet sind, wobei die Schaltereinrichtung (92) selektiv angesteuert wird, um die Betätigungsmagnetspuleneinrichtung (76,78) durch Schließen des Serienkreises anzusteuern, wobei das Anhängekupplungs-Regelsystem eine Schaltungseinrichtung einschließt, die in einer Regelkreis-Betriebsart zur Steuerung der Positionierung der Anhängekupplung (14) auf eine Position betreibbar ist, die durch einen Positionsbefehl bestimmt ist, oder die in einer Steuerbetriebsart mit offenem Regelkreis betreibbar ist, um die Bewegung der Anhängekupplung in Abhängigkeit von einem manuellen Schalter (72,74) zu steuern, wobei das Verfahren die folgenden Schritte umfaßt:
Schaffung eines Sicherheitstrennschalters (90) zum selektiven Trennen der Betätigungsmagnetspuleneinrichtungen (76,78) von der positiven Spannung,
Bestimmung, ob die Anhängekupplung eingeregelt ist,
Bestimmung, ob die Schaltungseinrichtung sich in der Steuerbetriebsart mit offenem Regelkreis befindet,
Messung, ob sich das Fahrzeug bewegt, und
wenn eine Bewegung des Fahrzeuges festgestellt wird, Ansteuern des Sicherheitstrennschalters, wenn die Anhängekupplung nicht eingeregelt ist oder wenn sich die Schaltungseinrichtung in der Steuerbetriebsart mit offenem Regelkreis befindet, wodurch eine ungesteuerte Bewegung der Anhängekupplung während des Transportes verhindert wird.

16. System nach einem der Ansprüche 10 bis 15, das weiterhin Zugkraftmeßeinrichtungen (24) zur Erzeugung eines eine auf die Anhägekupplung einwirkende Zugkraft darstellenden Zugkraft-Rückführungssignals,
Fehlerbestimmungseinrichtungen, die auf das Zugkraftbefehlssignal und auf das Zugkraft-Rückführungssignal ansprechen, um ein Positionsfehlersignal zu erzeugen,
auf das Positionsfehlersignal ansprechende Einrichtungen zur Bewegung der Anhängekupplung in Richtung auf die befohlene Position, und
Zugkraft-Empfindlichkeitssteuereinrichtungen umfaßt, die auf Änderungen des Zugkraftbefehlssignals ansprechen, um eine Tiefpaßfilterung des Zugkraft-Rückführungssignals durchzuführen, bevor es den Fehlerbestimmungseinrichtungen zugeführt wird.

17. System nach Anspruch 16, bei dem die Zugkraft-Empfindlichkeitssteuereinrichtung eine Tiefpaßfiltereinrichtung erster Ordnung mit einer Grenzfrequenz von 0,5 Hz einschließt, und bei dem die Filtereinrichtung auf das Zugkraft-Rückführungssignal anspricht, um den Fehlerbestimmungseinrichtungen ein tiefpaßgefiltertes Zugkraft-Rückführungssignal zu liefern.

18. System nach Anspruch 16 oder 17, bei dem die Anhängekupplung ein Bodenauflockerungs-Anbaugerät haltert, und bei dem Einrichtungen zur Sperrung der Filterung des Zugkraft-Rückführungssignals vorgesehen sind, wenn sich das Anbaugerät in Berührung mit dem Boden befindet.

19. System nach einem der Ansprüche 16 bis 18, das weiterhin Einrichtungen zur Bestimmung der Änderungsgeschwindigkeit des ZugkraftBefehlssignals einschließt, wobei das Zugkraftsignal lediglich dann gefiltert wird, wenn die Änderungsgeschwindigkeit des Positionssignals einen Schwellenwert überschreitet.

20. System nach einem der Ansprüche 16 bis 18, bei dem das Zugkraftsignal nur dann gefiltert wird, wenn sich das Befehlssignal ändert, und bei dem die Filterung beendet wird, wenn sich die Anhängekupplung der befohlenen Position genähert hat.

21. System nach einem der Ansprüche 10 bis 20, das weiterhin eine Modifikationseinrichtung (184) zur Modifikation des Positionssignals entsprechend dem Ausmaß des Schlupfes der Fahrzeugräder, eine Schlupfsignal-Generatoreinrichtung (124,126) zur Erzeugung eines Schlupfsignals, das dem Ausmaß des Radschlupfes entspricht, wobei die Schlupfsignal-Generatoreinrichtung einen Sensor (80,82) zur Messung der Drehgeschwindigkeit der Fahrzeugräder einschließt, und eine Radareinheit (84) umfaßt, die auf einer Seite des Fahrzeuges befestigt ist, um die wahre Bodengeschwindigkeit zu messen, wobei das System weiterhin folgende Teile umfaßt:
eine Schlupfsignal-Steuereinrichtung (116) zum selektiven Zuführen des Schlupfsignals an die Modifikationseinrichtung (184), wobei die Schlupfsignal-Steuereinrichtung Einrichtungen (182,190) zur Verhinderung der Zuführung des Schlupfsignals an die Modifikationseinrichtung einschließt, wenn der Positionsbefehl einen Befehl für eine Positionierung der Anhängekupplung höher als eine vorgegebene Schwellenerthöhe befiehlt.

22. System nach einem der Ansprüche 10 bis 21, das weiterhin eine einen Raddrehzahl-Korrekturfaktor bestimmende Einrichtung, die Einrichtungen (80,82) zur Erzeugung eines Raddrehzahl-Nennsignals durch Messung der Drehung der Hinterachse des Fahrzeuges umfaßt, und eine Radareinheit (84) umfaßt, die ein die wahre Bodengeschwindigkeit des Fahrzeuges darstellendes Signal erzeugt, wobei die einen Raddrehzahl-Korrekturfaktor bestimmende Einrichtung folgende Teile umfaßt:
Dividiereinrichtungen (40) zum Dividieren des die wahre Bodengeschwindigkeit darstellenden Signals durch das Raddrehzahl-Nennsignal zur Erzeugung eines einen Raddrehzahl-Korrekturfaktor darstellenden Signals, und
Einrichtungen (40), die automatisch die Dividiereinrichtungen freigeben, wenn die Anhebekupplung über einen Schwellenwertpegel angehoben ist und das die wahre Bodengeschwindigkeit darstellende Signal anzeigt, daß sich das Fahrzeug mit einer Geschwindigkeit bewegt, die größer als eine Schwellenwertgeschwindigkeit ist.

23. Verfahren nach einem der Ansprüche 1 bis 9 oder Anspruch 15, mit einer Modifikationseinrichtung (184) zur Modifikation des Positionssignals entsprechend dem Ausmaß des Schlupfes der Fahrzeugräder, mit einer Schlupfsignal-Generatoreinrichtung (80, 82, 84) zur Erzeugung eines Schlupfsignals, das dem Ausmaß des Radschlupfes entspricht, wobei die Schlupfsignal-Generatoreinrichtung einen Sensor (80,82) zur Messung der Drehgeschwindigkeit der Fahrzeugräder und eine Sensoreinheit (84) umfaßt, die an einer Seite des Fahrzeuges zur Messung der wahren Bodengeschwindigkeit befestigt ist, wobei das Verfahren die folgenden weiteren Schritte umfaßt:
Modifikation des Positionsbefehls zum Befehlen eines Anhebens der Anhängekupplung (14) über eine Schwellenwerthöhe hinaus, wenn sich das Fahrzeug einem Wendebereich nähert,
Sperrung der Zuführung des Schlupfsignals an die Modifikationseinrichtung (184), wenn der Positionsbefehl einen Befehl für eine Anhängekupplungs-Position oberhalb der Schwellenwerthöhe ergibt,
Modifikation des Positionsbefehls, um ein Absenken der Anhängekupplung zu befehlen, wenn das Fahrzeug eine Wende abschließt,
Bestimmung, wenn das Anbaugerät mit dem Boden in Eingriff kommt, wenn die Anhängekupplung abgesenkt wird, und
erneutes Anlagen des Schlupfsteuersignals an die Modifikationseinrichtung, wenn festgestellt wurde, daß das Anbaugerät mit dem Boden in Eingriff gekommen ist,
wodurch eine Modifikation des Positionssignals durch das Schlupfsignal während der Intervalle, während deren das Fahrzeug in einem Wendebereich gewendet wird, verhindert wird.

24. Verfahren nach einem der Ansprüche 1 bis 9 oder Anspruch 15, bei dem das System eine Einrichtung zur automatischen Bestimmung eines Radgeschwindigkeits-Korrekturfaktors in einem System mit einem Sensor (84) zur Messung der wahren Bodengeschwindigkeit eines Fahrzeuges und zur Erzeugung eines diese darstellenden ersten Signals und mit einem Sensor (80,82) zur Messung der Drehgeschwindigkeit der Fahrzeugräder und zur Erzeugung eines zweiten, diese Drehgeschwindigkeit darstellenden Signals aufweist, wobei das Fahrzeug eine Anhängekupplung (14) trägt, an der ein Anbaugerät befestigt ist, wobei das Verfahren weiterhin die folgenden Schritte umfaßt:
Bestimmen, wenn das Anbaugerät nicht mit dem Boden in Eingriff steht und die Geschwindigkeit des Fahrzeuges größer als eine Schwellenwertgeschwindigkeit ist, und
Dividieren des ersten Signals durch das zweite Signal zur Erzielung eines Korrektursignals, während die Anhängekupplung angehoben ist und die wahre Bodengeshwindigkeit des Fahrzeugs größer als die Schwellenwertgeschwindigkeit ist.

## Revendications

1. Méthode de commande d'un système d'attelage possédant une vanne (44) pour la commande du mouvement d'un attelage (14) monté sur un véhicule et des électro-aimants (76, 78) connectés dans un circuit en série avec un commutateur (92) via une source d'alimentation, le commutateur (92) étant excité sélectivement pour exciter les électro-aimants (76, 78) en fermant le dit circuit en série, le dit système de commande d'attelage comprenant des circuits susceptibles de fonctionner en mode asservi afin de commander le positionnement de l'attelage dans une position spécifiée par une commande de position ou susceptibles de fonctionner en mode non asservi pour commander le mouvement de l'attelage (14) en réaction à l'actionnement d'un commutateur manuel (72, 74), la dite méthode comprenant les étapes suivantes :
prévision d'un commutateur de coupure de sécurité (90) pour l'ouverture sélective du circuit en série;
détermination de la synchronisation de l'attelage (14);
détermination du mode asservi du circuit;
détection du mouvement de l'attelage (14);
détection de l'actionnement d'un commutateur manuel (72, 74); et
si le mouvement de l'attelage est détecté et qu'aucun commutateur manuel n'est actionné, l'excitation du dit commutateur de coupure de sécurité si l'attelage n'est pas synchronisé ou si le circuit est en mode asservi, le mouvement non commandé de l'attelage étant empêché lorsque le circuit fonctionne en mode non asservi.

2. Méthode selon la revendication 1 comportant, en outre :
la détection du mouvement du véhicule; et
l'excitation du commutateur de coupure de sécurité (90) lorsque le dit véhicule se déplace et que l'attelage n'est pas synchronisé ou que le circuit est en mode non asservi.

3. Méthode selon la revendication 1 ou 2, dans laquelle le commutateur de coupure de sécurité (90) est excité uniquement lorsque le mouvement d'attelage détecté est un mouvement descendant.

4. Méthode selon l'une quelconque des revendications 1 à 3, dans laquelle le commutateur de coupure de sécurité (90) est excité uniquement lorsque le mouvement d'attelage détecté persiste pendant au moins une période de seuil.

5. Méthode selon l'une quelconque des revendications 1 à 3, dans laquelle le commutateur de coupure de sécurité (90) est excité uniquement lorsque le mouvement d'attelage détecté persiste pendant au moins une première période de seuil après que l'attelage est resté immobile pendant au moins un intervalle fixe, ou persiste pendant au moins une seconde période de seuil supérieure à la dite première période de seuil si l'attelage n'est pas resté immobile pendant au moins le dit intervalle fixe.

6. Méthode selon l'une quelconque des revendications qui précèdent et comprenant les autres étapes ci-après :
prévision d'une boucle de rétroaction comprenant des moyens de détection de l'effort de traction (24) pour détecter l'effort de traction sur l'attelage et générer un signal d'effort de traction; dérivation du signal de l'effort de traction et du signal de commande d'un signal d'erreur pour la commande du mouvement de l'attelage;
filtrage passe-bas du signal d'effort de traction avant de l'appliquer au moyen de détermination de l'erreur pour en éliminer les variations de signal entraînées par le poids de l'attelage et l'outil monté sur ce dernier agissant de manière variée sur les moyens de détection de l'effort de traction lorsque le véhicule rebondit.

7. Méthode selon la revendication 6, dans laquelle le filtrage du signal d'effort de traction est initié uniquement lorsque le signal de commande est modifié et se termine lorsque la position de l'attelage s'aproche de la position commandée.

8. Méthode selon la revendication 6, dans laquelle le filtrage du signal d'effort de traction est initié uniquement lorsque le taux de variation du signal de commande dépasse une valeur de seuil.

9. Méthode revendiquée dans l'une quelconque des revendications 6 à 8, dans laquelle le signal d'effort de traction n'est pas filtré lorsque l'outil est en contact avec le sol.

10. Système de commande d'attelage comportant une vanne (44) pour la commande du mouvement d'un attelage (14) monté sur un véhicule et des électro-aimants (76, 78) connectés dans un circuit en série avec un commutateur (92) via une source de courant, le commutateur (92) étant excité sélectivement pour exciter les électro-aimants (76, 78) en fermant le dit circuit en série, le dit système de commande d'attelage comportant un circuit susceptible de fonctionner en mode asservi pour commander le positionnement de l'attelage (14) dans une position spécifiée par une commande de position ou susceptible de fonctionner en mode non asservi pour commander le mouvement de l'attelage en réaction à l'actionnement d'un commutateur manuel (72, 74) et appareil pour empêcher le mouvement non commandé de l'attelage lorsque le circuit fonctionne en mode non asservi, le dit appareil comprenant :
un commutateur de coupure de sécurité (90) pour l'ouverture sélective du circuit en série;
un premier moyen pour déterminer si l'attelage est synchronisé;
un deuxième moyen pour déterminer si le circuit est en mode non asservi;
un troisième moyen pour détecter le mouvement de l'attelage;
un quatrième moyen pour détecter l'actionnement d'un commutateur manuel et,
un cinquième moyen réagissant aux dits premier, deuxième, troisième et quatrième moyens pour l'excitation du dit commutateur de coupure de sécurité lorsque le mouvement de l'attelage est détecté et qu'aucun commutateur manuel n'est actionné si l'attelage n'est pas synchronisé ou que le circuit est en mode non asservi.

11. Système selon la revendication 10 et comportant en outre :
un sixième moyen pour détecter le mouvement du véhicule, le dit cinquième moyen réagissant au dit sixième moyen pour l'excitation du commutateur de coupure de sécurité lorsque le dit véhicule se déplace et que l'attelage n'est pas synchronisé ou que le circuit est en mode non asservi.

12. Système selon la revendication 10 ou 11, dans lequel le cinquième moyen comporte un moyen pour exciter le commutateur de coupure de sécurité (90) uniquement lorsque le mouvement d'attelage détecté par le dit troisième moyen est un mouvement descendant.

13. Système selon la revendication 10 ou 11, dans lequel le cinquième moyen comporte un moyen pour exciter le commutateur de coupure de sécurité (90) uniquement lorsque le mouvement d'attelage détecté par le dit troisième moyen persiste pendant au moins une période de seuil.

14. Système selon la revendication 10 ou 11, dans $lequel le dit cinquième moyen comprend :
un premier compteur pour compter les intervalles pendant lesquels l'attelage est immobile;
un moyen pour régler un indicateur sur un état sur deux lorsque le comptage du premier compteur atteint une valeur prédéterminée;
un deuxième compteur pour compter les intervalles pendant lesquels le mouvement non commandé de l'attelage persiste;
un premier et un deuxième comparateurs comparant le comptage du dit deuxième compteur avec les premières et les deuxièmes valeurs de seuil, respectivement, en fonction de l'état du dit indicateur.

15. Méthode de commande d'un système d'attelage comportant une vanne (44) pour la commande du mouvement d'un attelage (14) monté sur un véhicule et des électro-aimants (76, 78) connectés dans un circuit en série avec un commutateur (92) via une source de courant, le commutateur (92) étant excité sélectivement pour exciter les électro-aimants (76, 78) en fermant le dit circuit en série, le dit système de commande d'attelage comportant un circuit susceptible de fonctionner en mode asservi pour commander le positionnement de l'attelage (14) dans une position spécifiée par une commande de position ou susceptible de fonctionner en mode non asservi pour commander le mouvement de l'attelage (14) en réaction à l'actionnement d'un commutateur manuel (72, 74) $la dite $méthode comprenant les étapes suivantes :
prévision d'un commutateur de coupure de sécurité (90) pour la coupure sélective des électro-aimants (76, 78) de la tension positive;
détermination de la synchronisation de l'attelage;
détermination du mode non asservi du circuit;
détection du mouvement du véhicule; et
si le mouvement du véhicule est détecté, excitation du dit commutateur de coupure de sécurité si l'attelage n'est pas synchronisé ou si le circuit est en mode non asservi, empêchant ainsi un mouvement non commandé de l'attelage pendant le transport.

16. Système selon l'une quelconque des revendications 10 à 15 et comprenant en outre un moyen de détection de l'effort de traction (24) pour la production d'un signal de rétroaction de l'effort de traction représentatif de l'effort de traction de l'attelage;
moyen de détermination d'erreur réagissant au dit signal de commande de l'effort de traction et au dit signal de rétroaction de l'effort de traction pour la génération d'un signal d'erreur de position;
moyen réagissant au dit signal d'erreur de position pour déplacer l'attelage vers la position commandée, et
moyen de commande de sensibilité de l'effort de traction réagissant aux modifications du dit signal de commande de l'effort de traction pour le filtrage passe-bas du dit signal de rétroaction de l'effort de traction avant son application au dit moyen de détermination d'erreur.

17. Système selon la revendication 16 dans lequel le moyen de commande de sensibilité de l'effort de traction comprend un filtre passe-bas de premier ordre avec une fréquence de coupure de 0,5 Hz, le dit filtre réagissant au dit signal de rétroaction de l'effort de traction pour fournir au moyen de détermination de l'erreur un signal de rétroaction de l'effort de traction à filtrage passe-bas.

18. Système selon la revendication 16 ou 17 dans lequel l'attelage porte un outil de préparation du sol et dans lequel des moyens sont prévus pour inhiber le filtrage du dit signal de rétroaction de l'effort de traction lorsque l'outil est en contact avec le sol.

19. Système selon l'une quelconque des revendications 16 à 18 et comportant en outre des moyens pour déterminer le taux de modification du signal de commande de l'effort de traction, le signal d'effort de traction étant filtré uniquement si le taux de modification du signal de position dépasse une valeur de seuil.

20. Système selon l'une quelconque des revendications 16 à 18 dans lequel le signal d'effort de traction est filtré uniquement lorsque le signal de commande est modifié, le filtrage se terminant avec l'approche par l'attelage de la position commandée.

21. Système selon l'une quelconque des revendications 10 à 20 et comprenant en outre un moyen modificateur (184) pour modifier le signal de position selon le degré de patinage des roues du véhicule, des moyens de génération d'un signal de patinage (124, 126) pour la génération d'un signal de patinage correspondant au degré de patinage des roues, les moyens de génération d'un signal de patinage comprenant un détecteur (80, 82) pour détecter la vitesse de rotation des roues du véhicule et un radar (84) monté d'un côté du véhicule pour détecter la vitesse véritable au sol, le système comportant en outre :
un moyen de commande du signal de patinage (116) pour l'application sélective du dit signal de patinage au dit moyen modificateur (184), le dit moyen de commande du signal de patinage comportant des moyens (182, 190) pour empêcher l'application du signal de patinage au moyen modificateur lorsque la commande de position commande le positionnement de l'attelage à une hauteur supérieure à une hauteur de seuil.

22. Système selon l'une quelconque des revendications 10 à 21 et comprenant en outre un moyen de détermination du facteur de correction de la vitesse des roues comportant des moyens (80, 82) pour la production d'un signal de vitesse de roue nominale en détectant la rotation de l'essieu arrière du véhicule, et un radar (84) produisant un signal représentant la vitesse véritable au sol du véhicule, le dit facteur de correction de la vitesse de roue déterminant des moyens comprenant :
un moyen diviseur (40) pour diviser le dit signal de vitesse véritable au sol par le dit signal de vitesse de roue nominale de manière à produire un signal représentant un facteur de correction de vitesse de roue; et
un moyen (40) mettant le dit moyen diviseur automatiquement en service lorsque le dit attelage est soulevé au-dessus d'un niveau de seuil et que le signal représentant la vitesse véritable au sol indique que le véhicule se déplace à une valeur supérieure à la valeur de seuil.

23. Méthode selon l'une quelconque des revendications 1 à 9 ou à la revendication 15, comportant un moyen modificateur (184) pour modifier le signal de position conformément au degré de patinage des roues du véhicule, un moyen de génération du signal de patinage (80, 82, 84) pour générer un signal de patinage correspondant au degré de patinage des roues, le moyen générant le signal de patinage comportant un détecteur (80, 82) pour détecter la vitesse de rotation des roues du véhicule et un dispositif détecteur (84) monté d'un côté du véhicule pour détecter la vitesse véritable au sol, la méthode comportant les étapes tsupplé- mentaires suivantes :
lorsque le véhicule s'aproche d'une fourrière, modification de la commande de position pour commander le relèvement de l'attelage (14) au-dessus d'une hauteur de seuil,
inhibition de l'application du signal de patinage au moyen modificateur (184) lorsque la commande de position commande une position d'attelage au-dessus de la dite hauteur de seuil;
lorsque le véhicule termine un virage, modification de la commande de position pour commander l'abaissement de l'attelage;
détermination du moment où l'outil entre en contact avec le sol lorsque l'attelage est abaissé; et
réapplication du signal de commande de patinage au moyen modificateur lorsque l'on a déterminé que l'outil est entré en contact avec le sol
empêchement, ce faisant, de la modification du signal de position par le signal de patinage pendant les intervalles où le véhicule tourne dans une fourrière.

24. Méthode selon l'une quelconque des revendications 1 à 9, ou la revendication 15, dans laquelle le système possède des moyens pour déterminer automatiquement un facteur de correction de vitesse de roue dans un système doté d'un détecteur (84) pour détecter la vitesse véritable au sol d'un véhicule et générer un premier signal représentatif de cette vitesse et un détecteur (80, 82) pour détecter la vitesse de rotation des roues du véhicule et générer un second signal représentatif de cette vitesse, le dit véhicule portant un attelage (14) avec un outil fixé sur le premier nommé, la dite méthode comportant les étapes supplémentaires suivantes :
détermination du moment où l'outil n'est pas en contact avec le sol et où la vitesse du véhicule est supérieure à une valeur de seuil; et
alors que l'attelage est relevé et que la vitesse véritable au sol du véhicule est supérieure à la vitesse de seuil, division du dit premier signal par le dit second signal pour obtenir un signal de correction.
